# EUROPEAN PATENT SPECIFICATION

(11) **EP 2 679 422 B1**
(45) Date of publication and mention of the grant of the patent: **07.06.2017**
(21) Application number: 13173711.6
(22) Date of filing: 26.06.2013
(51) Int. Cl.: B60J 1/20, B60J 7/00

(54) **Sunblind system for vehicle**
Sonnenschutzsystem für Fahrzeuge
Système de pare-soleil pour véhicule

(30) Priority: 26.06.2012 GB 201211288
(43) Date of publication of application: 01.01.2014
(73) Proprietor: Nissan Motor Manufacturing (UK) Ltd., Cranfield Bedfordshire MK43 0DB (GB)
(72) Inventor: Truter, Werner, Cranfield, Bedfordshire MK430DB (GB)

(56) References cited:
- FR-A1- 2 897 633
- FR-A1- 2 925 103

## Description

### Technical Field of the Invention

The present invention relates to a sunblind system for a vehicle according to the preamble of claim 1; to a vehicle fitted with such a sunblind system; and to a method of reducing noise emanating from such a sunblind system. Examples of such a sunblind system are known from FR 2925103 A and FR 2897633 A.

### Background to the Invention

Vehicles with panoramic roof windows (also known as glass roofs) have become increasingly popular, as they help to create a spacious and pleasant ambience in the vehicle cabin. However, on hot sunny days, having a large amount of glass in the roof can lead to problems of overheating in the vehicle cabin, due to solar heating caused by infrared radiation (IR) in the sunlight passing through the glass. A further problem arises due to excessive glare, particularly for the rear seat passengers when the sun is relatively low in the sky.

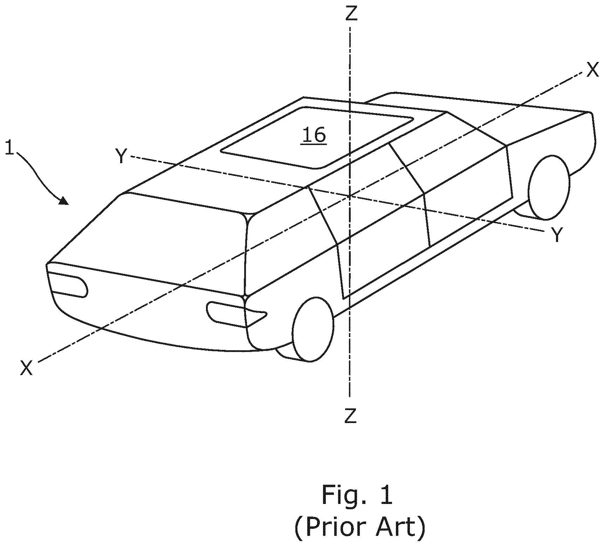

In order to control light and IR transmission through a panoramic window, it is known to fit a sunblind system, commonly a roller blind system, that can be extended fully or partially along the window. A typical known roller blind system 10 is illustrated with references to Figures 1 to 6, in which:
Figure 1 shows a schematic perspective view of a vehicle 1, showing its longitudinal axis X-X, its transverse axis Y-Y, and its vertical axis Z-Z;
Figure 2 is an interior view of a roof in a vehicle cabin showing a panoramic window;
Figure 3 is a longitudinal cross-sectional view through the roof of the vehicle in Figure 2 illustrating a sunblind system;
Figure 4 is a perspective view from above of one end of a roller 14 of the sunblind system of Figure 3;
Figure 5 is a perspective view of a shoe forming part of a sunblind system in accordance with the invention; and
Figure 6 is an enlarged, schematic lateral cross-sectional view of part of a sunblind in accordance with the invention, illustrating engagement of an end of a supporting rib for a web in a guide track.

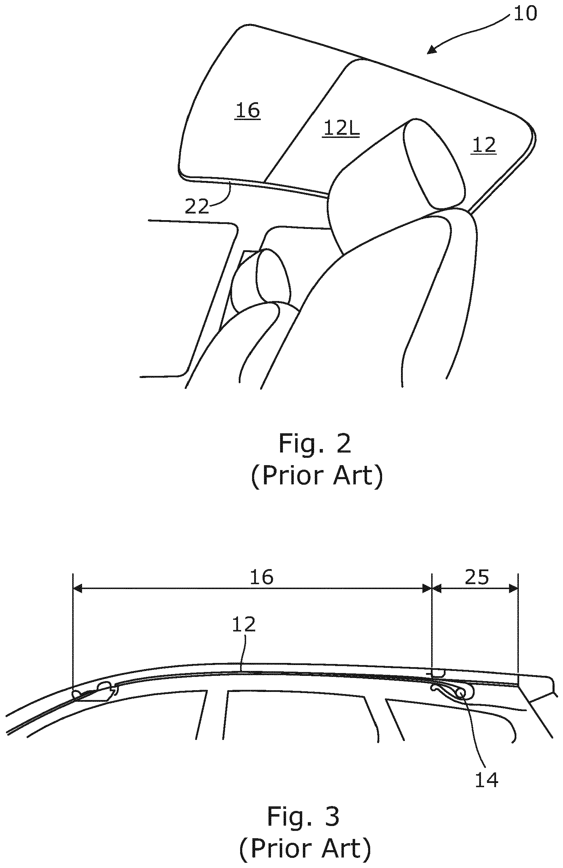

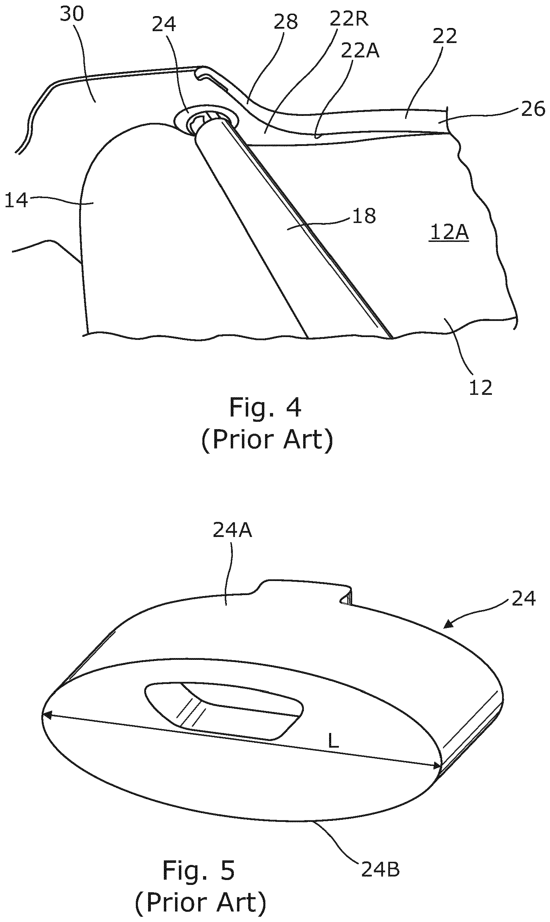

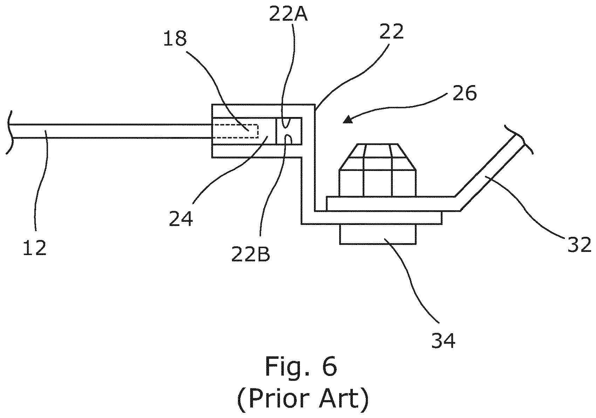

The system 10 includes a web 12 of flexible material that can be moved from a stored condition, in which it is wrapped about a retraction roller 14 (which roller may be tubular), to a deployed condition in which at least part of the web 12 extends below a roof window 16. In its deployed condition, the web 12 may be extended to fully cover the window; or it may be partially extended, to cover only part of the window length. For example, to screen the rear seat passengers from glare, the web might be extended so as to cover a rear portion of the window only. (see Figure 2) The web 12 is typically made of a material that is fully or partially opaque. The web 12 is supported in its deployed condition by means of a number of ribs 18 that extend transversely to the direction of extension of the web, i.e. in a lateral direction of the vehicle across the window, parallel to axis Y-Y in Fig. 1. A primary rib is typically located at a forward, leading end 12L of the web 12, with the remaining ribs 18 spaced along the length of the web. The ribs 18 are relatively stiff in comparison to the web material. The ends of the ribs are received in guide tracks 22 that extend longitudinally along either side of the window 16. The guide tracks are typically inwardly directed C-shaped channel members with opposed upper and lower guide surfaces 22A, 22B (Fig. 6). The ends of the ribs 18 have sliding shoes 24 with upper and lower surfaces 24A, 24B (Fig. 5) that contact, and slide between, the upper and lower guide surfaces 22A, 22B.

The roller 14 is located adjacent one end of the window below an opaque area 25 of the vehicle roof (Fig. 3); and typically towards the rear of the vehicle, where there is more room to accommodate the roller and associated mechanisms. Alternatively, the roller may be located beneath a portion of the window which is masked, so that the roller and any ancillary equipment cannot be seen through the window. Starting from a "web retracted" condition, the web 12 is drawn from the roller 14, and the shoes 24 on the ends of each rib 18 enter the guide tracks 22 at their rearward ends 22R as the web unwinds. The guide tracks 22 have a main portion 26 extending over the majority of their length, in which the shoes 24 are a close sliding fit between the upper and lower guide surfaces 22A, 22B (Fig. 6). This reduces the free play between the shoes and the guide surfaces.

However, at the inlet end of the guide tracks, where the ends of each rib 18 are first introduced when coming off the roller, the guide tracks have a transitional portion (28, Fig. 4) in which the upper and lower guide surfaces 22A, 22B curve, or are otherwise angled towards each in the direction of extension of the web. The transitional portion 28 forms a funnel-like arrangement which guides the shoes 24 into correct alignment for entry into the main portions 26 of the guide tracks 22. The transitional portion 28 also allows for changes in the angle of the web coming off the roller as the web is unwound. Figure 4 illustrates the position in which a rib 18 having a shoe 24 has been drawn off the roller 14, and is just entering the transitional portion 28.

The ends of the roller 14 are typically supported by means of end caps 30 mounted to the vehicle body. The end caps often also comprise the transitional portions 28 of the guide tracks 22 on their respective sides of the window, and at least part of the main portion 26; though this is not always the case. Figure 6 illustrates a part of the main portion 26 of one of the guide tracks 22, which is attached to a mounting bracket 32 on the vehicle body by means of a nut and a bolt 34.

A problem with the known arrangement is that vibrations can cause the shoes 24 to rattle against the guide surfaces 22A, 22B in the transitional portions 28 of the guide tracks. The shoes 24 are able to rattle against the guide surfaces in the transitional portion due to the flexibility of the web. Usually, the ribs 18 are mounted to an upper surface 12A of the web 12, so as not to be visible inside the car. As a result, the shoes 24 will tend to contact the upper guide surface 22A of guide tracks 22 in the transitional portion 28. Such rattling may occur as the web 12 is being extended, and a rib 18 is passing through the transitional portion; or it may occur if a rib 18 happens to be located in the transitional portion 28 once the web has been deployed. The latter is most likely to occur when the web 12 is only partially extended, as the sunblind would typically be configured so that no rib 18 is located in the transitional portion 28 when the web 12 is fully extended. Once the shoes 24 enter the main portions 26 of the guide tracks 22, there is insufficient clearance between the shoes 24 and the guide surfaces 22A, 22B for rattling to occur.

There is a need therefore for an improved sunblind system which overcomes, or at least mitigates, the problems of the known sunblind system.

### Summary of the Invention

According to a first aspect of the invention, there is provided a sunblind system for a vehicle comprising: a web of flexible material movable from a stored condition to a deployed condition; the web being supported in its deployed condition by means of a plurality of ribs extending transversely to a direction of extension of the web, and spaced along its length; the ends of the ribs being received in a pair of guide tracks extending in the direction of extension of the web; each guide track having opposed guide surfaces; each guide track also comprising a main portion in which the ends of the ribs have a relatively close sliding fit between the opposed guide surfaces, and a transitional portion at an inlet end of the tracks; in which transitional portion the opposed guide surfaces are angled toward each other in the direction of extension of the web, for guiding the ends of the ribs into the main portion as the web is deployed; characterized in that: in the transitional portion of each guide track, at least one of the opposed guide surfaces has a region in which the surface is recessed so as to define a plurality of spaced peaks.

Recessing the at least one guide surface so as to define a plurality of spaced peaks reduces the surface area for contact with the ends of the ribs. This helps to reduce or eliminate rattling between an end of a rib and the guide surface in the transitional portion.

The recessed region of the at least one guide surface may undulate in a longitudinal direction, the peaks of the undulations defining the plurality of spaced peaks for contact with the ends of the ribs. The undulations may comprise a series of transverse grooves and ridges in the at least one guide surface.

The ribs may be mounted to the web on one side thereof; and the recessed surface region may be provided on at least the guide surface proximal to the side of the web on which the ribs are mounted. The ribs may be mounted to an outer side of the web, facing away from the interior volume of the vehicle.

In one embodiment, the sunblind system is configured for use with a roof mounted window in a vehicle, the opposed guide surfaces being upper and lower guide surfaces, and the ribs are mounted to a side of the web that is uppermost when extended, the recessed surface region being provided on at least the upper guide surface.

A sliding shoe may be provided at each end of each rib, each sliding shoe having opposed surfaces for engagement with the opposed guide surfaces of its respective guide track. The pitch of the undulations may be such that there are a minimum of three peaks within a distance equal to the length of one of the guide shoes.

The web may be wound about a roller in the stored condition. The roller may be positioned proximal to the inlet ends of the guide tracks. The ends of the roller may be supported by means of end caps, each end cap also defining at least the transitional portion of a respective one of the guide tracks.

The opposed guide surfaces may curve towards each other in the transitional portion.

In accordance with a second aspect of the invention, there is provided a vehicle comprising a sunblind system in accordance with the first aspect of the invention.

The sunblind system may be configured for use with a roof mounted window of the vehicle. The roller, where fitted, may be located proximal to a rear edge of the window, the guide tracks extending in a longitudinal direction of the vehicle along opposing sides of the window.

In accordance with a third aspect of the invention, there is provided a method of reducing noise emanating from a sunblind system, the sunblind system comprising:
a web (12) of flexible material movable from a stored condition to a deployed condition;
the web being supported in its deployed condition by means of a plurality of ribs (18) extending transversely (Y-Y) to a direction of extension (X-X) of the web, and spaced along its length;
the ends of the ribs (18) being received in a pair of guide tracks (22) extending in the direction of extension of the web;
each guide track (22) having opposed guide surfaces (22A, 22B);
each guide track also comprising a main portion (26) in which the ends of the ribs (18) are a relatively close sliding fit between the opposed guide
surfaces (22A, 22B), and a transitional portion (28) at an inlet end of the tracks;
in which transitional portion the opposed guide surfaces (22A, 22B) are angled toward each other in the direction of extension of the web (12), for guiding the ends of the ribs (18) into the main portion (26) as the web is deployed;
the method being characterised by the step of recessing a region (44) of at least one of the opposed guide surfaces (22A, 22B) in the transitional portion (28) of each guide track (22), so as to define
a plurality of spaced peaks (48). The rib ends may be fitted with guide shoes.

### Detailed Description of the Invention

In order that the invention may be more clearly understood, an embodiment thereof will now be described, by way of example only, with reference to the remaining accompanying drawings, of which:

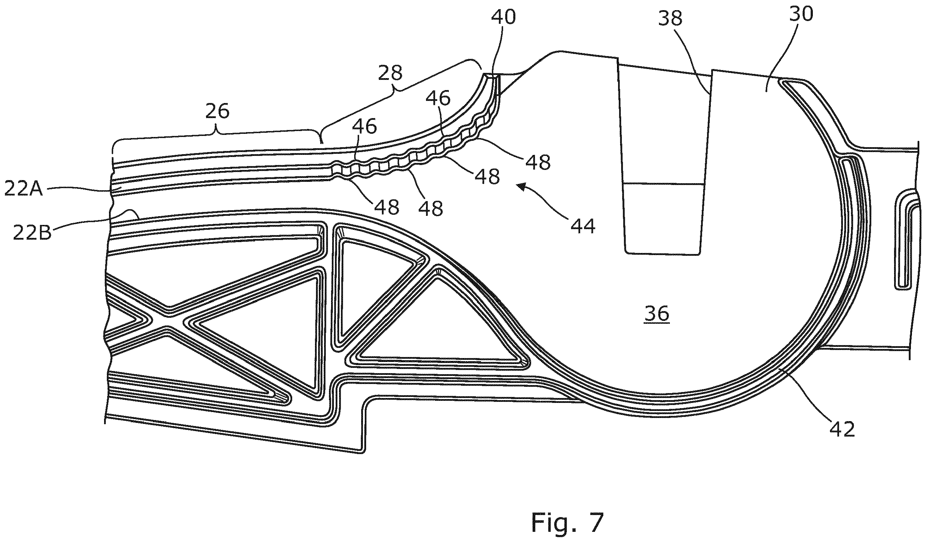

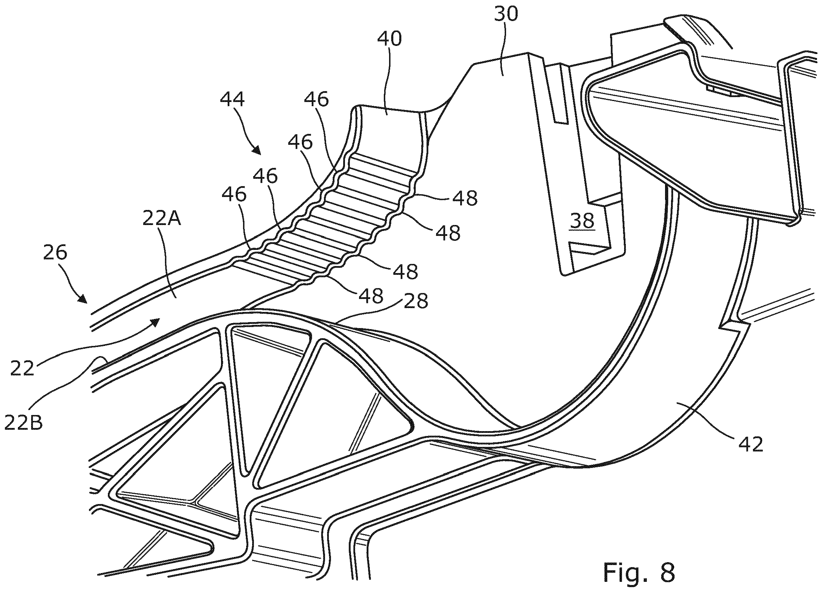

Figure 7 is a perspective view taken from a first angle of an end cap for supporting one end of a roller in a sunblind system in accordance with the invention; and Figure 8 is a perspective view taken from a second angle of the end cap of Figure 7. Both of these angles are looking upwards at the end caps from a lower viewpoint.

A sunblind system in accordance with an embodiment of the invention is constructed similarly to the known system 10 described above, to which the reader should refer. Accordingly, the system includes a web 12 of flexible material which in a stored condition is wound on a retraction roller 14. The web 12 is deployable from the roller to be extended below a panoramic window 16 in the roof of a vehicle. The roller 14 is located to the rear of the window 16 below an opaque part 25 of the roof; but could be located below a rear portion of the window which is masked, so that the roller and related apparatus cannot be seen from above.

A number of ribs 18 are attached to the web 12 to support the web in its deployed condition. A primary rib is attached to the front or leading edge 12L of the web 12, and other ribs 18 are mounted to the upper surface 12A of the web 12 at intervals along its length. The ribs 18 extend transversely across the web 12. The ends of the ribs locate in longitudinal guide channels 22 located on either side of the roof window 16 as the web is unwound from the roller 14. The guide tracks 22 are generally inwardly facing C-shaped channel members having opposed upper and lower guide surfaces 22A, 22B. Sliding shoes 24 are provided at the ends of each of the ribs 18. The shoes 24 each have upper and lower surfaces 24A, 24B for sliding engagement with the upper and lower guide surfaces 22A, 22B of the guide tracks 22. As can be seen from Figure 5, each shoe 24 is generally oval shaped in longitudinal cross section, the upper and lower surfaces 24A, 24B being curved and tapering towards either longitudinal end of the shoe. This shape makes it easier for the shoes 24 to enter the guide tracks 22, and reduces sliding friction between the shoes and the guide tracks. The shoes can be made from any suitable material, but are conveniently moulded from plastics materials.

The system also has a mechanism for deploying and retracting the web 12, as is well known in the art. Since the deployment mechanism is not relevant to the present invention, it will not be described in detail but can take any suitable form, such as an electrically driven cable system.

The guide tracks 22 have a main portion 26 which extends over the majority of their length, and in which the spacing between the upper and lower guide surfaces 22A, 22B is such that the shoes 24 are a close sliding fit between them (Fig. 6). At the rear (or inlet) end of the guide tracks (22R, Fig. 4) adjacent the roller 14, the guide tracks have a transitional portion 28 in which the guide surfaces 22A, 22B curve inwardly towards each other before merging into the main portion. The transitional portion 28 acts like a funnel to guide the shoes 24 into the main portion. In the present embodiment, the guide surfaces 22A, 22B are curved in the transitional portion. This is advantageous, as there are no sharp edges for the shoes 24 to contact. However, the guide surfaces could be inclined, or otherwise angled together in the transitional region; rather than being curved.

The ends of the roller 14 are supported in end caps 30, which are moulded from a plastics material; but can be produced by any suitable method, and from any suitable material. The end caps 30 define the transitional portions 28, and at least part of the main portions 26 of the guide tracks 22 on their respective sides of the window 16. Figures 7 and 8 show one of the end caps 30, which supports the right hand or driver's side end of the roller 14. The end cap 30 has a generally planar end wall 36, which includes a formation 38 in which an end of the roller 14 locates. Projecting inwardly from an edge of the end wall are two flange portions 40, 42. A first flange portion 40 is located about a forward, upper region of the roller 14. The inner surface of the first flange portion 40 forms the upper guide surface 22A of the guide track 22 on that side of the window - in the transitional portion 28, and in at least part of the main portion 26. The other flange portion 42 extends in a curved path below the roller from a rear side towards the front where its inner surface forms the lower guide surface 22B of the guide track 22 on that side of the window; in the transitional portion 28, and in at least part of the main portion 26.

Only a small part of the main portion 26 of a guide track 22 can be seen in Figures 7 and 8; but it will be appreciated that the main portion 26 extends forwardly along a side of the window 16 for as far as the web 12 needs to be supported; which would usually be up to, and just beyond, a front edge of the window. The main portion 26 need not extend in a straight line; but could be curved, as required by the profiling of the window and/or the roof. The remainder of the main portion 26 not shown in Figures 7 and 8 could be formed by an extension of the end cap 30; or by other components that connect with the end cap 30. The end cap 30 on the other end of the roller 14 is substantially a mirror image of the end cap 30 shown in Figures 7 and 8; that is to say, the end caps are "handed", as left-hand or right-hand caps.

In accordance with the present invention, in the transitional portion 28 of each guide track 22, there is provided a region 44 in which the upper guide surface is recessed so as to reduce the surface area contacting the shoes. The recessing may be applied in a pattern to define a plurality of spaced peaks. In the present embodiment, the region 44 is recessed to define a series or array of laterally extending grooves 46 separated by ridges 48. The peaks of the ridges 48 between the grooves 46 are located at the same height as the flat upper guide surface 22A outside of the undulating region 44; and form the only points of contact between the shoes 24 and upper guide surface 22A in the shaped surface region 44. The undulating regions 44 extend longitudinally over those parts of the upper guide surfaces 22A against which the shoes 24 might be expected to knock when the vehicle is subject to vibration, and a rib 18 is located in the transitional portion 28. In the undulating region 44, the surface area for contact between the shoe 24 and the upper guide surface 22A when vibration occurs is reduced compared with a flat or smooth guide surface, as the shoes 24 can only contact the peaks 48 of the undulations. This reduces or eliminates rattling between the shoes 24 and the upper guide surface 22A.

The pitch of the undulations 46, 48 is configured to reduce the surface area for contact with a shoe 24 to a minimum; whilst also ensuring that the shoes are guided into the main portion 26 of the guide track smoothly; and without entering and/or getting caught in any of the grooves 46 as the web 12 is deployed. In an embodiment, the pitch of the undulations 46, 48 is set to ensure a minimum of three ridges or peaks 48 within the length L of a shoe 24.

Whilst a longitudinally undulating surface in the region 44 has been found to work well in reducing rattling, whilst also being effective in guiding the shoes 24 into the main portion 26, it will be appreciated that the upper guide surface 22A could be shaped or recessed in other ways to have a similar effect. For example, the region 44 may be provided with a number of longitudinal grooves and ridges; or the region 44 could be formed with a number of pillars or bumps which define spaced peaks.

In the present embodiment in which the ribs 18 are attached to the upper surface of the web 12, the shoes 24 tend to contact the upper guide surface 22A in the transitional portion 28 when the vehicle is subject to vibration. Accordingly, a recessed surface region 44 is provided only on the upper guide surface. In other configurations, the shoes 24, or other end features of the ribs 18, may have a tendency to rattle against both the upper and lower guide surfaces 22A, 22B, or indeed just the lower guide surface 22B. In these cases, it will be appreciated that recessed surface regions 44 can be provided on both the upper and lower guide surfaces; or just the lower guide surface, as required.

The above embodiment is described by way of example only. Many variations are possible without departing from the scope of the invention as defined in the appended claims. For example, whilst the invention is particularly suitable for use with a sunblind system in which a web of flexible material is stored on a roller when not deployed, it could be adapted for use in a sunblind system in which a flexible web is stored in a folded condition.

## Claims

1. A sunblind system (10) for a vehicle (1) comprising:
a web (12) of flexible material movable from a stored condition to a deployed condition;
the web being supported in its deployed condition by means of a plurality of ribs (18) extending transversely (Y-Y) to a direction of extension (X-X) of the web, and spaced along its length;
the ends of the ribs (18) being received in a pair of guide tracks (22) extending in the direction of extension of the web;
each guide track (22) having opposed guide surfaces (22A, 22B);
each guide track also comprising a main portion (26) in which the ends of the ribs (18) have a relatively close sliding fit between the opposed guide surfaces (22A, 22B), and a transitional portion (28) at an inlet end of the tracks;
in which transitional portion the opposed guide surfaces (22A, 22B) are angled toward each other in the direction of extension of the web (12), for guiding the ends of the ribs (18) into the main portion (26) as the web is deployed;
**characterized in that**:
in the transitional portion (28) of each guide track (22), at least one of the opposed guide surfaces (22A, 22B) has a region (44) in which the surface is recessed so as to define a plurality of spaced peaks (48).

2. A sunblind system (10) as claimed in claim 1, in which the recessed region (44) of the at least one guide surface (22A, 22B) undulates in a longitudinal direction, the peaks (48) of the undulations defining the plurality of spaced peaks for contact with the ends of the ribs (18).

3. A sunblind system (10) as claimed in claim 2, in which the undulations comprise a series of transverse grooves (46) and ridges (48) in the at least one guide surface (22A, 22B).

4. A sunblind system (10) as claimed in any one of claims 1 to 3, wherein the ribs (18) are mounted to the web (12) on one side (12A) thereof; and the recessed surface region (44) is provided on at least the guide surface (22A) proximal to the side (12A) of the web (12) on which the ribs (18) are mounted.

5. A sunblind system (10) as claimed in any one of the previous claims, wherein the system is configured for use with a roof mounted window (16) in a vehicle (1), the opposed guide surfaces being upper (22A) and lower (22B) guide surfaces, and in which the ribs (18) are mounted to a side (12A) of the web that is uppermost when extended, the recessed surface region (44) being provided on at least the upper guide surface (22A).

6. A sunblind system (10) as claimed in any one of the preceding claims, wherein a guide shoe (24) is provided at each end of each rib (18), each guide shoe having opposed surfaces (24A, 24B) for engagement with the opposed guide surfaces (22A, 22B) of its respective guide track (22).

7. A sunblind system (10) as claimed in claim 6 when dependent on claim 2, wherein the pitch of the undulations is such that there are a minimum of three peaks (48) within a distance equal to the length of one of the guide shoes (24).

8. A sunblind system (10) as claimed in any one of the preceding claims, in which the web (12) is wound about a roller (14) in the stored condition; the roller being positioned proximal to the inlet ends (28) of the guide tracks (22).

9. A sunblind system (10) as claimed in claim 8, in which the ends of the roller (14) are supported by means of end caps (30), each end cap also defining at least the transitional portion (28) of a respective one of the guide tracks (22).

10. A sunblind system (10) as claimed in any one of the preceding claims, wherein the opposed guide surfaces (22A, 22B) curve towards each other in the transitional portion (28).

11. A vehicle (1) comprising a sunblind system (10) as claimed in any one of the preceding claims.

12. A vehicle (1) as claimed in claim 11, in which the sunblind system (10) is configured for use with a roof mounted window (16) of the vehicle.

13. A vehicle (1) as claimed in claim 12, comprising a system as claimed in claim 8, in which the roller (14) is located proximal to a rear edge of the window (16), the guide tracks (22) extending in a longitudinal direction (X-X) of the vehicle (1) along opposing sides of the window.

14. A method of reducing noise emanating from a sunblind system (10) for a vehicle (1), the sunblind system comprising:
a web (12) of flexible material movable from a stored condition to a deployed condition;
the web being supported in its deployed condition by means of a plurality of ribs (18) extending transversely (Y-Y) to a direction of extension (X-X) of the web, and spaced along its length;
the ends of the ribs (18) being received in a pair of guide tracks (22) extending in the direction of extension of the web;
each guide track (22) having opposed guide surfaces (22A, 22B);
each guide track also comprising a main portion (26) in which the ends of the ribs (18) are a relatively close sliding fit between the opposed guide surfaces (22A, 22B), and a transitional portion (28) at an inlet end of the tracks;
in which transitional portion the opposed guide surfaces (22A, 22B) are angled toward each other in the direction of extension of the web (12), for guiding the ends of the ribs (18) into the main portion (26) as the web is deployed;
the method being **characterised by** the step of recessing a region (44) of at least one of the opposed guide surfaces (22A, 22B) in the transitional portion (28) of each guide track (22), so as to define a plurality of spaced peaks (48).

15. A method according to claim 14, wherein the rib ends are fitted with guide shoes (24).

## Patentansprüche

1. Sonnendachsystem (10) für ein Fahrzeug (1), Folgendes umfassend:
eine Bahn (12) aus flexiblem Material, die aus einem gelagerten Zustand in einen entfalteten Zustand beweglich ist;
wobei die Bahn in ihrem entfalteten Zustand durch mehrere Rippen (18), die sich quer (Y-Y) zu einer Erweiterungsrichtung (X-X) der Bahn erstrecken und entlang ihrer Länge beabstandet sind, getragen wird;
wobei die Enden der Rippen (18) in einem Paar Führungsschienen (22), die sich in der Erweiterungsrichtung der Bahn erstrecken, aufgenommen sind;
wobei jede Führungsschiene (22) einander gegenüberliegende Führungsoberflächen (22A, 22B) aufweist;
wobei jede Führungsschiene ferner einen Hauptabschnitt (26), in dem die Enden der Rippen (18) einen vergleichsweise engen Gleitsitz zwischen den einander gegenüberliegenden Führungsoberflächen (22A, 22B) aufweisen, und einen Übergangsabschnitt (28) an einem Eintrittsende der Schienen umfasst;
wobei ein Übergangsabschnitt der einander gegenüberliegenden Führungsoberflächen (22A, 22B) in der Erweiterungsrichtung der Bahn (12) zueinander angewinkelt sind, um die Enden der Rippen (18) in den Hauptabschnitt (26) zu führen, wenn die Bahn entfaltet wird;
**dadurch gekennzeichnet, dass**:
im Übergangsabschnitt (28) jeder Führungsschiene (22) wenigstens eine der einander gegenüberliegenden Führungsoberflächen (22A, 22B) einen Bereich (44) aufweist, in dem die Oberfläche vertieft ist, um mehrere beabstandete Erhöhungen (48) zu definieren.

2. Sonnendachsystem (10) nach Anspruch 1, wobei der vertiefte Bereich (44) der wenigstens einen Führungsoberfläche (22A, 22B) sich in einer Längsrichtung wellt, wobei die Erhöhungen (48) der Wellungen die mehreren voneinander beabstandeten Erhöhungen zum Berühren der Enden der Rippen (18) definiert.

3. Sonnendachsystem (10) nach Anspruch 2, wobei die Wellungen eine Reihe von Querrillen (46) und Auswölbungen (48) in der wenigstens einen Führungsoberfläche (22A, 22B) umfassen.

4. Sonnendachsystem (10) nach einem der Ansprüche 1 bis 3, wobei die Rippen (18) an der Bahn (12) an einer Seite (12A) davon angebracht sind; und der vertiefte Oberflächenbereich (44) auf wenigstens der Führungsoberfläche (22A) proximal zur Seite (12A) der Bahn (12), auf der die Rippen (18) angebracht sind, bereitgestellt ist.

5. Sonnendachsystem (10) nach einem der vorhergehenden Ansprüche, wobei das System zur Verwendung mit einem Dachfenster (16) in einem Fahrzeug (1) gestaltet ist, wobei es sich bei den einander gegenüberliegenden Führungsoberflächen um eine obere (22A) und eine untere (22B) Führungsoberfläche handelt und wobei die Rippen (18) an einer Seite (12A) der Bahn, die sich ganz oben befindet, wenn sie erweitert ist, angebracht sind, wobei der vertiefte Oberflächenbereich (44) auf wenigstens der oberen Führungsoberfläche (22A) bereitgestellt ist.

6. Sonnendachsystem (10) nach einem der vorhergehenden Ansprüche, wobei ein Führungsschuh (24) an jedem Ende jeder Rippe (18) bereitgestellt ist, wobei jeder Führungsschuh einander gegenüberliegende Oberflächen (24A, 24B) zum Eingreifen in die einander gegenüberliegenden Führungsoberflächen (22A, 22B) seiner jeweiligen Führungsschiene (22) aufweist.

7. Sonnendachsystem (10) nach Anspruch 6, wenn abhängig von Anspruch 2, wobei die Schräge der Wellungen derart ist, dass wenigstens drei Erhöhungen (48) in einem Abstand, der der Länge eines der Führungsschuhe (24) entspricht, vorliegen.

8. Sonnendachsystem (10) nach einem der vorhergehenden Ansprüche, wobei die Bahn (12) im gelagerten Zustand um eine Rolle (14) gewickelt ist; wobei die Rolle proximal zu den Eintrittsenden (28) der Führungsschienen (22) angeordnet sind.

9. Sonnendachsystem (10) nach Anspruch 8, wobei die Enden der Rolle (14) durch Endkappen (30) gelagert sind, wobei jede Endkappe ferner wenigstens den Übergangsabschnitt (28) einer jeweiligen der Führungsschienen (22) definiert.

10. Sonnendachsystem (10) nach einem der vorhergehenden Ansprüche, wobei die einander gegenüberliegenden Führungsoberflächen (22A, 22B) sich im Übergangsabschnitt (28) zueinander krümmen.

11. Fahrzeug (1), umfassend ein Sonnendachsystem (10) nach einem der vorhergehenden Ansprüche.

12. Fahrzeug (1) nach Anspruch 11, wobei das Sonnendachsystem (10) zur Verwendung mit einem Dachfenster (16) des Fahrzeugs gestaltet ist.

13. Fahrzeug (1) nach Anspruch 12, umfassend ein System nach Anspruch 8, wobei die Rolle (14) sich proximal zu einer Hinterkante des Fensters (16) befindet, wobei die Führungsschienen (22) sich in einer Längsrichtung (X-X) des Fahrzeugs (1) entlang einander gegenüberliegenden Seiten des Fensters erstrecken.

14. Verfahren zum Verringern von Geräuschen, die von einem Sonnendachsystem (10) für ein Fahrzeug (1) stammen, wobei das Sonnendachsystem Folgendes umfasst:
eine Bahn (12) aus flexiblem Material, die aus einem gelagerten Zustand in einen entfalteten Zustand beweglich ist;
wobei die Bahn in ihrem entfalteten Zustand durch mehrere Rippen (18), die sich quer (Y-Y) einer Erweiterungsrichtung (X-X) der Bahn erstrecken und entlang ihrer Länge beabstandet sind, getragen wird;
wobei die Enden der Rippen (18) in einem Paar Führungsschienen (22), die sich in der Erweiterungsrichtung der Bahn erstrecken, aufgenommen sind;
wobei jede Führungsschiene (22) einander gegenüberliegende Führungsoberflächen (22A, 22B) aufweist;
wobei jede Führungsschiene ferner einen Hauptabschnitt (26), in dem die Enden der Rippen (18) sich in einem vergleichsweise engen Gleitsitz zwischen den einander gegenüberliegenden Führungsoberflächen (22A, 22B) befinden, und einen Übergangsabschnitt (28) an einem Eintrittsende der Schienen umfasst;
wobei die einander gegenüberliegenden Führungsoberflächen (22A, 22B) im Übergangsabschnitt zueinander in der Erweiterungsrichtung der Bahn (12) angewinkelt sind, um die Enden der Rippen (18) in den Hauptabschnitt (26) zu führen, wenn die Bahn entfaltet wird;
wobei das Verfahren **gekennzeichnet ist durch** den Schritt eines Vertiefens eines Bereichs (44) wenigstens einer der einander gegenüberliegenden Führungsoberflächen (22A, 22B) im Übergangsabschnitt (28) jeder Führungsschiene (22), um mehrere voneinander beabstandete Erhöhungen (48) zu definieren.

15. Verfahren nach Anspruch 14, wobei die Rippenenden mit Führungsschuhen (24) ausgestattet sind.

## Revendications

1. Système de pare-soleil (10) pour un véhicule (1) comprenant :
une toile (12) de matériau flexible mobile d'un état fermé à un état déployé ;
la toile étant supportée dans son état déployé au moyen d'une pluralité de nervures (18) s'étendant de façon transversale (Y-Y) à une direction d'extension (X-X) de la toile, et espacées suivant sa longueur ;
les extrémités des nervures (18) étant reçues dans une paire de gorges de guidage (22) s'étendant dans la direction d'extension de la toile ;
chaque gorge de guidage (22) ayant des surfaces de guidage opposées (22A, 22B) ;
chaque gorge de guidage comprenant également une portion principale (26) dans laquelle les extrémités des nervures (18) ont un ajustement glissant relativement serré entre les surfaces de guidage opposées (22A, 22B) et une portion de transition (28) au niveau d'une extrémité d'entrée des gorges ;
dans laquelle portion de transition les surfaces de guidage opposées (22A, 22B) sont inclinées les unes vers les autres dans la direction d'extension de la toile (12), pour guider les extrémités des nervures (18) dans la portion principale (26) lorsque la toile est déployée ;
**caractérisé en ce que** :
dans la portion de transition (28) de chaque gorge de guidage (22), au moins l'une des surfaces de guidage opposées (22A, 22B) a une région (44) dans laquelle la surface est en retrait de façon à définir une pluralité de sommets espacés (48).

2. Système de pare-soleil (10) selon la revendication 1, dans lequel la région en retrait (44) de l'au moins une surface de guidage (22A, 22B) ondule dans une direction longitudinale, les sommets (48) des ondulations définissant la pluralité de sommets espacés pour un contact avec les extrémités des nervures (18).

3. Système de pare-soleil (10) selon la revendication 2, dans lequel les ondulations comprennent une série de rainures (46) et de crêtes (48) transversales dans l'au moins une surface de guidage (22A, 22B).

4. Système de pare-soleil (10) selon l'une quelconque des revendications 1 à 3, dans lequel les nervures (18) sont montées sur la toile (12) sur un côté (12A) de celle-ci ; et la région de surface en retrait (44) est prévue sur au moins la surface de guidage (22A) proximale au côté (12A) de la toile (12) sur laquelle les nervures (18) sont montées.

5. Système de pare-soleil (10) selon l'une quelconque des revendications précédentes, dans lequel le système est configuré pour une utilisation avec une fenêtre montée sur le toit (16) dans un véhicule (1), les surfaces de guidage opposées étant des surfaces de guidage supérieure (22A) et inférieure (22B), et dans lequel les nervures (18) sont montées sur un côté (12A) de la toile qui est le plus haut lorsqu'elle est étendue, la région de surface en retrait (44) étant prévue au moins sur la surface de guidage supérieure (22A).

6. Système de pare-soleil (10) selon l'une quelconque des revendications précédentes, dans lequel un patin de guidage (24) est prévu au niveau de chaque extrémité de chaque nervure (18), chaque patin de guidage ayant des surfaces opposées (24A, 24B) pour un enclenchement avec les surfaces de guidage opposées (22A, 22B) de sa gorge de guidage (22) respective.

7. Système de pare-soleil (10) selon la revendication 6, lorsqu'elle dépend de la revendication 2, dans lequel le pas des ondulations est tel qu'il y a un minimum de trois sommets (48) dans une distance égale à la longueur de l'un des patins de guidage (24).

8. Système de pare-soleil (10) selon l'une quelconque des revendications précédentes, dans lequel la toile (12) est enroulée autour d'un rouleau (14) dans l'état fermé ; le rouleau étant positionné proximal aux extrémités d'entrée (28) des gorges de guidage (22).

9. Système de pare-soleil (10) selon la revendication 8, dans lequel les extrémités du rouleau (14) sont supportées au moyen d'embouts (30), chaque embout définissant également au moins la portion de transition (28) d'une gorge respective des gorges de guidage (22).

10. Système de pare-soleil (10) selon l'une quelconque des revendications précédentes, dans lequel les surfaces de guidage opposées (22A, 22B) s'incurvent l'une vers l'autre dans la portion de transition (28).

11. Véhicule (1) comprenant un système de pare-soleil (10) tel que revendiqué dans l'une quelconque des revendications précédentes.

12. Véhicule (1) selon la revendication 11, dans lequel le système de pare-soleil (10) est configuré pour une utilisation avec une fenêtre montée sur le toit (16) du véhicule.

13. Véhicule (1) selon la revendication 12, comprenant un système tel que revendiqué dans la revendication 8, dans lequel le rouleau (14) est situé proximal à un bord arrière de la fenêtre (16), les gorges de guidage (22) s'étendant dans une direction longitudinale (X-X) du véhicule (1) le long de côtés opposés de la fenêtre.

14. Procédé de réduction de bruit émanant d'un système de pare-soleil (10) pour un véhicule (1), le système de pare-soleil comprenant :
une toile (12) de matériau flexible mobile d'un état fermé à un état déployé ;
la toile étant supportée dans son état déployé au moyen d'une pluralité de nervures (18) s'étendant de façon transversale (Y-Y) à une direction d'extension (X-X) de la toile, et espacées suivant sa longueur ;
les extrémités des nervures (18) étant reçues dans une paire de gorges de guidage (22) s'étendant dans la direction d'extension de la toile ;
chaque gorge de guidage (22) ayant des surfaces de guidage opposées (22A, 22B) ;
chaque gorge de guidage comprenant également une portion principale (26) dans laquelle les extrémités des nervures (18) sont dans un ajustement glissant relativement serré entre les surfaces de guidage opposées (22A, 22B) et une portion de transition (28) au niveau d'une extrémité d'entrée des gorges ;
dans laquelle portion de transition les surfaces de guidage opposées (22A, 22B) sont inclinées l'une vers l'autre dans la direction d'extension de la toile (12), pour guider les extrémités des nervures (18) dans la portion principale (26) lorsque la toile est déployée ;
le procédé étant **caractérisé par** l'étape de retrait d'une région (44) d'au moins l'une des surfaces de guidage opposées (22A, 22B) dans la portion de transition (28) de chaque gorge de guidage (22), de façon à définir une pluralité de sommets espacés (48).

15. Procédé selon la revendication 14, dans lequel les extrémités de nervure sont équipées de patins de guidage (24).
